# EUROPÄISCHE PATENTSCHRIFT

(11) **EP 2 346 633 B1**
(45) Veröffentlichungstag und Bekanntmachung des Hinweises auf die Patenterteilung: **19.06.2013**
(21) Anmeldenummer: 09783638.1
(22) Anmeldetag: 01.10.2009
(51) Int. Cl.: B23B 31/20, B23B 31/26, B23B 31/28, B23B 31/30

(54) **Spindelanordnung für Werkzeuge oder Werkstücke**
Spindle arrangement for tools or work pieces
Ensemble broche pour outils ou pièces

(30) Priorität: 08.10.2008 DE 102008051612
(43) Veröffentlichungstag der Anmeldung: 27.07.2011
(73) Patentinhaber: Traub Drehmaschinen GmbH & Co. KG, 73262 Reichenbach an der Fils (DE)
(72) Erfinder: BAUMANN, Ulrich, 73252 Lenningen (DE)
(74) Vertreter: Hoeger, Stellrecht & Partner Patentanwälte
(86) Internationale Anmeldenummer: PCT/EP2009/062748
(87) Internationale Veröffentlichungsnummer: WO 2010/040681

(56) Entgegenhaltungen:
- EP-A1- 0 281 934
- US-A- 2 475 519
- US-A- 2 574 754
- US-A- 3 176 553
- US-A- 4 347 753

## Beschreibung

Die Erfindung betrifft eine Spindelanordnung gemäß dem oberbegriff des Anspruchs 1, mit einer Aufnahmeeinheit für Werkzeuge oder Werkstücke, die eine Spindel und eine dieser zugeordneten Spanneinrichtung für das Werkzeug oder Werkstück mit in einem Aufnahmeraum der Spindel angeordneten Spannelementen einer Spannvorrichtung und mit einer Spannkrafterzeugungseinheit. Eine solche Spindelanordnung ist aus der US 2 574 754 bekannt.

Derartige Aufnahmeeinheiten sind aus dem Stand der Technik bekannt, wobei die Spannkrafterzeugungseinheit üblicherweise ein Hydraulikzylinder ist, mit welchem die Spannvorrichtung beaufschlagbar ist, und zwar so, dass durch ständige Beaufschlagung der Spannvorrichtung, das heißt ständiges Einwirken des Hydraulikzylinders, das Werkzeug oder Werkstück gespannt wird, wobei hierzu der Hydraulikzylinder ständig mit Hydraulikmedium zu beaufschlagen ist.

Ausgehend von diesem Stand der Technik liegt der Erfindung die Aufgabe zugrunde, eine Aufnahmeeinheit der gattungsgemäßen Art derart zu verbessern, dass bei Aufrechterhaltung einer zuverlässigen Spannung des Werkzeugs oder Werkstücks eine einfachere Betätigung der Spannvorrichtung möglich ist.

Diese Aufgabe wird bei einer Spindelanordnung gemäß Anspruch 1 erfindungsgemäß gelöst.

Das Schieberelement ist erfindungsgemäß durch eine elektrische Betätigungseinheit bewegbar so dass die Tatsache ausgenutzt werden kann, dass sich mit einer derartigen elektrischen Betätigungseinheit berührungslos eine Kraft auf das mit dem Schieberelement bewegbare Element der Betätigungseinheit aufgebracht werden kann und somit eine berührungslose Kraftübertragung zwischen einem mit der Spindel mitdrehenden Element und einem stationären Element möglich ist.

Die elektrische Betätigungseinheit weist erfindungsgemäß einen mit dem Schieberelement verbundenen und mit der Spindel mitdrehenden Aktor und einen am Spindelgehäuse angeordneten Stator auf.

Der Vorteil der erfindungsgemäßen Lösung ist darin zu sehen, dass durch die Kulissenbahn eine einfache Möglichkeit besteht, das Keilelement zwischen der Freigabestellung und der Druckstellung und umgekehrt zu bewegen und dass andererseits durch das Keilelement in einfacher Weise eine Bewegung des Aktorelements erzeugbar ist.

Insbesondere erlaubt eine derartige Lösung auch die Erzeugung einer hohen, auf die Spannelemente wirkenden Kraft.

Hinsichtlich des Verlaufs oder der Ausrichtung der Eintrittsrichtung wurden bislang keine näheren Angaben gemacht.

Prinzipiell könnte die Eintrittsrichtung ungefähr parallel zu einer Mittelachse der Spindel verlaufen.

Besonders günstig ist es jedoch, wenn die Eintrittsrichtung quer zur Mittelachse des Aufnahmekörpers, insbesondere senkrecht zur Mittelachse des Aufnahmekörpers, verläuft, da damit in einfacher Weise eine Umsetzung der Bewegung des Keilkörpers in eine Bewegung des Aktorelements und somit eine Bewegung der Spannvorrichtung realisiert werden kann.

Prinzipiell wäre es dabei denkbar, dass das Stützelement stationär fixiert ist, beispielsweise stationär an einem Trägerrohr der Spannkrafterzeugungseinheit fixiert ist, und damit relativ zur Mittelachse des Aufnahmekörpers unverschieblich angeordnet ist.

Eine besonders vorteilhafte Lösung sieht vor, dass das Stützelement durch eine federelastische Abstützeinheit abgestützt ist.

Besonders günstig ist diese Lösung dann, wenn beim Übergang des Keilelements von der Freigabestellung in die Druckstellung das Stützelement vom Aktorelement wegbewegbar ist und die federelastische Abstützeinheit des Stützelements von einem entspannten Zustand in einen gespannten Zustand übergeht.

Dieser gespannte Zustand lässt sich insbesondere dann vorteilhaft ausnutzen, wenn die federelastische Abstützeinheit in der Druckstellung des Keilelements eine Spannkraft erzeugt, mit welcher das Aktorelement in Richtung der zweiten Stellung wirkt.

Damit besteht in einfacher Weise zunächst die Möglichkeit, die Kraft, die auf das Keilelement wirkt, zu verstärken und andererseits die Möglichkeit, eine Spannkraft zur Betätigung der Spannvorrichtung zur Verfügung zu stellen, welche die Möglichkeit eröffnet, ständig die Spannvorrichtung zu beaufschlagen.

Um andererseits auch sicherzustellen, dass die Spannkrafterzeugungseinheit die Spannvorrichtung löst, und zwar dann, wenn das Keilelement in seiner Freigabestellung steht, ist vorzugsweise vorgesehen, dass das Aktorelement in Richtung der ersten Stellung federbeaufschlagt ist.

Hinsichtlich der Ausbildung der Stützfläche wurden bislang keine näheren Angaben gemacht. So sieht eine vorteilhafte Lösung vor, dass die Stützfläche gegenüber der Eintrittsrichtung in einem spitzen Winkel verläuft.

Ferner ist vorzugsweise vorgesehen, dass die Druckfläche gegenüber der Eintrittsrichtung in einem spitzen Winkel verläuft.

Das Keilelement kann in unterschiedlichster Art und Weise ausgebildet sein.

Vorzugsweise ist dabei vorgesehen, dass das Keilelement mindestens eine in einem spitzen Winkel zur Eintrittsrichtung verlaufende Keilfläche aufweist.

Dabei könnte das Keilelement beispielsweise selbst als Keil ausgebildet sein.

Besonders vorteilhaft ist es jedoch, wenn das Keilelement als Kugel ausgebildet ist, da eine Kugel ein einfach herzustellender Körper ist, der aufgrund seiner geringen Berührungsflächen reibungsarm relativ zur Druckfläche und zur Stützfläche und/oder auf der Druckfläche und auf der Stützfläche bewegbar ist.

Um insbesondere hohe Kräfte zur Betätigung der Spanneinrichtung zur Verfügung zu haben, ist vorzugsweise vorgesehen, dass das Keilelement zwischen der Freigabestellung und der Druckstellung einen Weg in der Eintrittsrichtung durchläuft, welcher größer ist als der Weg, über welchen das Aktorelement zwischen der ersten Stellung und der zweiten Stellung bewegbar ist.

Mit dieser Lösung besteht somit die Möglichkeit, die auf das Keilelement wirkende Kraft noch zusätzlich zu verstärken.

Im Zusammenhang mit der vorstehenden Erläuterung der einzelnen Ausführungsbeispiele wurde nicht näher auf die Art und Ausbildung der Kulissenbahn eingegangen.

Eine vorteilhafte Lösung sieht vor, dass die Kulissenbahn des Schieberelements so ausgebildet ist, dass ein Schieberweg, welchen das Schieberelement zwischen der ersten Stellung und der zweiten Stellung durchläuft, größer ist als der Weg des Keilelements zwischen der Freigabestellung und der Druckstellung.

Besonders günstig ist eine Lösung, bei welcher die Spannkrafterzeugungseinheit in der ersten und der zweiten Stellung selbsthaltend ausgebildet ist, da damit die Möglichkeit besteht, bei Erreichen der ersten Stellung oder der zweiten Stellung nicht ständig mit einer Krafterzeugungseinheit auf die Spannkrafterzeugungseinheit einzuwirken, so dass selbst bei Wegfall einer Krafteinwirkung die Spannkrafterzeugungseinheit die jeweilige Stellung beibehält und beispielsweise in der zweiten Stellung ständig die Spannelemente beaufschlagt hält, ohne dass eine ständige Beaufschlagung der Spannkrafterzeugungseinheit, insbesondere des Schieberelements, erforderlich ist.

Dies lässt sich bei der erfindungsgemäßen Lösung beispielsweise dadurch erreichen, dass die die Freigabestellung und die Druckstellung festlegenden Abschnitte der Kulissenbahn parallel zur Verschieberichtung des Schieberelements verlaufen.

Um das Schieberelement in einfacher Weise betätigen zu können, ist vorzugsweise vorgesehen, dass das Schieberelement mittels einer einen Linearantrieb umfassenden Betätigungseinheit zwischen der ersten Stellung und der zweiten Stellung bewegbar ist.

Hinsichtlich der Ausbildung des Linearantriebs sind die unterschiedlichsten Möglichkeiten denkbar.

So sieht eine vorteilhafte Lösung vor, dass der Linearantrieb ein elektrischer Antrieb ist.

Eine derartige Spindelanordnung ist insbesondere so ausgebildet, dass mit der Spindel ein auf das Schieberelement der Aufnahmeeinheit einwirkendes Element einer Betätigungseinheit mitrotiert.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: einen Längsschnitt durch ein Ausführungsbeispiel einer erfindungsgemäßen Spindelanordnung mit in einer ersten Stellung stehender Spannvorrichtung und in einer Freigabestellung stehendem Keilkörper;
- Fig. 2: einen Schnitt Längs Linie 1-1 des Ausführungsbeispiels mit in einer zweiten Stellung stehendem Aktor und mit einem in einer Druckstellung stehendem Keilkörper.

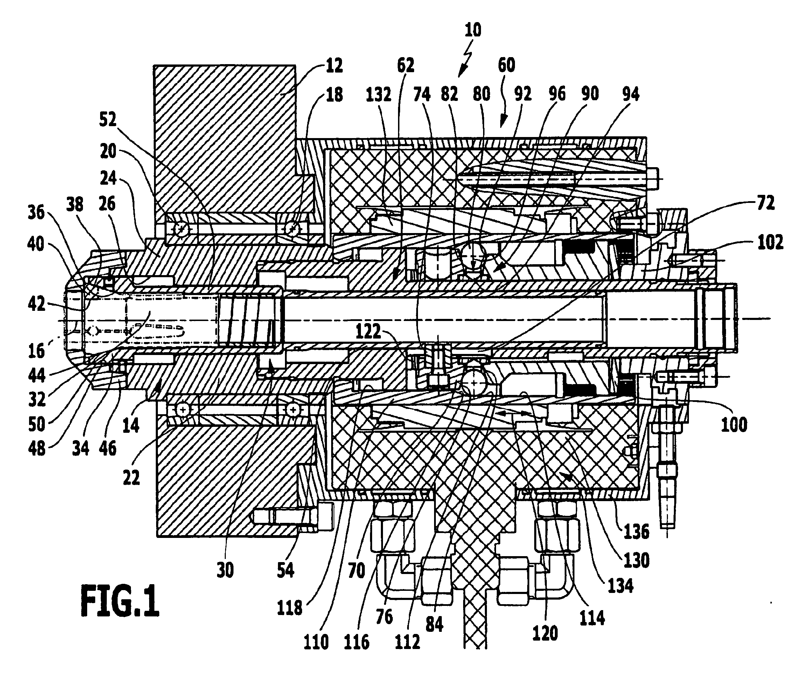

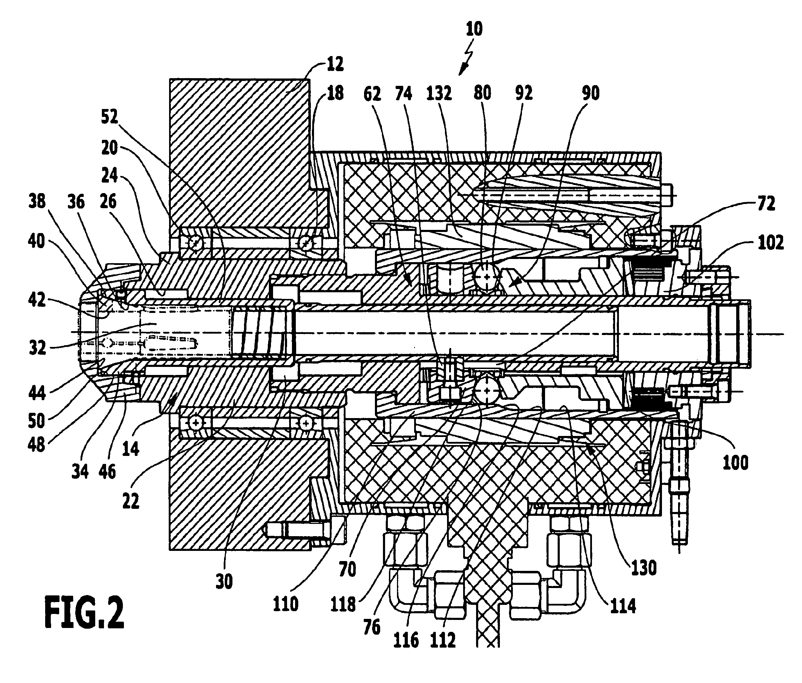

Ein Ausführungsbeispiel einer erfindungsgemäßen Spindelanordnung 10, dargestellt in Fig. 1 und 2, umfasst ein Spindelgehäuse 12, in welchem eine Spindel 14 um eine Spindelachse 16 mittels Drehlagern 18 und 20 drehbar gelagert ist.

Die Spindel 14 umfasst ein in den Drehlagern 18 und 20 gelagertes Spindelrohr 22, welches in einem vorderen Bereich 24 eine Ausnehmung 26 aufweist, in welcher eine Spannvorrichtung 32 einer als Ganzes mit 30 bezeichneten Spanneinrichtung angeordnet ist, wobei die Spannvorrichtung 32 im dargestellten Ausführungsbeispiel als sogenannte Druckspannzange ausgebildet ist, welche einerseits Druckbacken 34 aufweist, welche mit Schrägflächen 36 versehen sind und mit diesen Schrägflächen 36 in der Lage sind, korrespondierende Außenflächen 38 von Spannbacken 40 zu beaufschlagen und damit die Spannbacken 40 mit ihren Spannflächen radial zur Spindelachse 16 hin zu bewegen, um mit den Spannflächen 42 der Spannbacken 40 ein Werkstück oder ein Werkzeug einzuspannen.

Die Spannbacken 40 liegen dabei an einer Anlagefläche 44 einer als Ganzes mit 46 bezeichneten frontseitigen Überwurfmutter der Spindel 14 an, welche verhindert, dass sich die Spannbacken 40 in Richtung der Spindelachse 16 aus der Ausnehmung 26 herausbewegen, insbesondere dann, wenn die Druckbacken 34 in Richtung der Überwurfmutter 46 bewegt werden, um die Spannbacken 40 mit den Schrägflächen 36 radial zur Spindelachse 16 in Richtung derselben zu bewegen.

Die Druckbacken 34 stützen sich dabei ihrerseits mit einer Außenseite 48 an einer zylindrisch zur Spindelachse 16 verlaufenden Innenfläche 50 der frontseitigen Überwurfmutter 46 ab.

Die Druckbacken 34 sind durch eine als Ganzes mit 52 bezeichnete Druckhülse in Richtung der Spindelachse 16 bewegbar, wobei die Druckhülse 52 durch ein mit 54 bezeichnetes Druckrohr beaufschlagt ist, welches Teil einer sich auf einer der Überwurfmutter 46 gegenüberliegenden Seite der Spindel 16 an diese anschließenden Spannkrafterzeugungseinheit 60 ist.

Die Spannkrafterzeugungseinheit 60 umfasst ferner ein mit dem Spindelrohr 22 verbundenes Trägerrohr 62, welches von dem Spindelrohr 22 gehalten ist und mit diesem mitrotiert, wobei innerhalb des Trägerrohrs 62 das Druckrohr 54 verläuft und vom Trägerrohr 62 geführt ist.

Auf einer dem Druckrohr 54 abgewandten radial außenliegenden Seite des Trägerrohrs 62 sitzt ein als Ganzes mit 70 bezeichnetes Aktorelement, welches über ein eine Ausnehmung 72 im Trägerrohr 62 durchgreifendes Kopplungselement 74 starr mit dem Druckrohr 54 verbunden ist und somit auch gemeinsam mit dem Druckrohr 54 in Richtung der Spindelachse 16 verschiebbar ist.

Dabei ist das Aktorelement 70 mit einer Druckfläche 76 versehen, welche einem Keilelement 80 zugewandt ist, so dass das Keilelement 80 mit einer Keilfläche 82 auf die Druckfläche 76 des Aktorelements 70 einwirken kann.

Ferner ist auf einer der Keilfläche 82 gegenüberliegenden Seite des Keilelements 80 eine zweite Keilfläche 84 des Keilelements 80 vorgesehen, welche einem als Ganzes mit 90 bezeichneten Stützelement zugewandt ist, das seinerseits eine der zweiten Keilfläche 84 zugewandte Stützfläche 92 trägt.

Dabei bildet sich zwischen der Stützfläche 92 und der Druckfläche 76 ein Zwischenraum 94, in welchen das Keilelement 80 in mehr oder weniger starkem Maße eintreten kann, wobei hierzu das Keilelement 80 in Richtung einer Eintrittsrichtung 96 zu bewegen ist, die quer zur Spindelachse 16, vorzugsweise radial und somit senkrecht zu dieser verläuft.

Das Stützelement 90 sitzt ebenfalls auf dem Trägerrohr 62 und zwar auf einer dem Druckrohr 54 abgewandten radial außenliegenden Seite desselben, ist relativ zu diesem beweglich und stützt sich über eine federelastische Abstützeinheit 100 an einem auf dem Trägerrohr 62 sitzenden und an diesem fixierten Gegenlagerring 102 ab, wobei die federelastische Abstützeinheit 100 im einfachsten Fall durch eine Tellerfeder gebildet ist, welche dadurch spannbar ist, dass sich das Stützelement 90 in Richtung des Gegenlagerrings 102 bewegt.

Zum Bewegen des Keilkörpers 80 in der Eintrittsrichtung 96 ist ein als Ganzes mit 110 bezeichnetes Schieberelement vorgesehen, welches vorzugsweise sowohl das Aktorelement 70 als auch das Stützelement 90 auf ihrer dem Trägerrohr 62 abgewandten Seite übergreift und auf einer dem Keilelement 80 zugewandten Seite eine Kulissenbahn 112 trägt, mit welcher das Keilelement 80 beaufschlagbar ist, dabei weist die Kulissenbahn 112 einen im Wesentlichen parallel zur Spindelachse 16 verlaufenden bezüglich der Spindelachse 16 radial außenliegenden Bahnabschnitt 114, einen sich an den radial außenliegenden Bahnabschnitt 114 anschließenden Übergangsabschnitt 116 und einen bezüglich der Spindelachse 16 radial innenliegenden Bahnabschnitt 118 auf.

Durch ein Bewegen des Schieberelements 110 in einer Verschieberichtung 120, welche parallel zur Spindelachse 16 verläuft, besteht nun die Möglichkeit, entweder mit dem radial außenliegenden Bahnabschnitt 114, dem Übergangsabschnitt 116 oder dem radial innenliegenden Bahnabschnitt 118 der Kulissenbahn 112 auf das Keilelement 80 einzuwirken.

Solange die Kulissenbahn 112 mit dem radial außenliegenden Bahnabschnitt 114 auf das Keilelement 80 einwirkt, steht dieses in einer sogenannten Freigabestellung, in welcher das Keilelement bezüglich der Spindelachse 16 eine maximal radial außenliegende Stellung einnimmt.

Wird nun das Schieberelement 110 in der Verschieberichtung 120 so verschoben, dass nicht der radial außenliegende Bahnabschnitt 114 sondern der Übergangsabschnitt 116 auf das Keilelement 80 einwirkt, so erfolgt durch diesen eine zunehmende Verschiebung des Keilelements 80 in der Eintrittsrichtung 96, das heißt in den Zwischenraum 94 zwischen der Stützfläche 92 des Stützelements 90 und der Druckfläche 76 des Aktorelements 70 hinein. Wird durch Weiterschieben des Schieberelements 110 in der Verschieberichtung 120 die Kulissenbahn 112 so weit verschoben, dass der radial innenliegende Bahnabschnitt 118 auf das Keilelement 80 wirkt, so liegt das Keilelement 80 in seiner, bezogen auf die Spindelachse 16 maximal innenliegenden Stellung, und hat sich dabei so weit in der Eintrittsrichtung 96 in den Zwischenraum 94 hineinbewegt, dass durch das Keilelement 80 mit den Keilflächen 82 und 84 die Druckfläche 76 und die Stützfläche 92 auseinandergedrückt wurden. In dieser Stellung steht das Keilelement in seiner sogenannten Druckstellung.

Das Auseinanderbewegen der Druckfläche 76 und der Stützfläche 92 hat zur Folge, dass das Stützelement 90 in Richtung des Gegenlagerrings 102 bewegt wird und dabei die federelastische Abstützeinheit 100 spannt. Außerdem wird gleichzeitig aufgrund der Einwirkung auf die Druckfläche 76 das Aktorelement 70 vom Stützelement 90 weg in Richtung des Spindelrohrs 22 und der Druckhülse 52 bewegt und bewirkt dabei, aufgrund des Kopplungselements 74, dass in gleichem Maße wie das Aktorelement 70 auch das Druckrohr 54 in Richtung des Spindelrohrs 22 bewegt wird.

Da das Druckrohr 54 mit der Druckhülse 52 zusammenwirkt, insbesondere in der Lage ist, die Druckhülse 52 in Richtung der Überwurfmutter 46 zu beaufschlagen, führt die Bewegung des Druckrohrs 54 zu einer identischen Bewegung der Druckhülse 52 und somit der Druckbacken 34 in Richtung der Überwurfmutter 46, wobei die Druckbacken 34 in der bereits beschriebenen Art und Weise die Spannbacken 40 so beaufschlagen, dass diese sich radial nach innen zur Spindelachse 16 hin bewegen.

Da sich beim Übergang des Keilkörpers 80 von der Freigabestellung in die Druckstellung auch das Stützelement 90 in Richtung des Gegenlagerrings 102 bewegt hat und die federelastische Abstützeinheit 100 gespannt hat, wirkt in der Druckstellung des Keilelements 80 auch die federelastische Abstützeinheit 100 über das Stützelement 90, die den Keilkörper 80 und das Aktorelement 70 auf das Druckrohr 54 und somit auch die Druckhülse 52 mit den Druckbacken 34 ein, so dass letztlich die Druckbacken 34 in der Druckstellung des Keilkörpers 80 mit der Spannkraft der federelastischen Abstützeinheit 100 beaufschlagt sind und aufgrund der Wirkung dieser Spannkraft die Spannbacken 40 radial zur Spindelachse 16 hin bewegen.

Vorzugsweise erfolgt dabei beim Zusammenwirken der Druckbacken 34 mit den Spannbacken 40 eine Verstärkung der auf das Druckrohr 54 in Richtung der Überwurfmutter 46 einwirkenden Kraft zu einer im Bereich der Spannflächen 42 radial nach innen wirkenden Spannkraft, die größer ist als die auf das Druckrohr 54 wirkende Kraft in Richtung der Überwurfmutter 46, so dass letztlich diese Spannkraft größer ist als die in axialer Richtung parallel zur Spindelachse 16 auf das Druckrohr 54 wirkende Kraft.

Soll das in der Spannvorrichtung 32 durch die Spannbacken 40 fixierte Werkzeug oder Werkstück gelöst werden, so wird das Schieberelement 110 in der Verschieberichtung 120 so weit verschoben, dass nicht mehr der innenliegende Bahnabschnitt 118 des Schieberelements 110 auf das Keilelement 80 wirkt, sondern der außenliegende Bahnabschnitt 114, so dass das Keilelement 80 von der Druckstellung in seine Freigabestellung übergeht und somit zumindest partiell entgegengesetzt zur Eintrittsrichtung 96 aus dem Zwischenraum 94 heraus bewegt.

Damit haben die Druckfläche 76 und die Stützfläche 92 die Möglichkeit, sich mit Hilfe der Federelemente 122 unter Reduzierung der Ausdehnung des Zwischenraums 94 in Richtung der Spindelachse 16 aufeinanderzu zu bewegen, so dass einerseits das Stützelement 90 sich vom Gegenlagerring 102 entfernen kann, so dass eine Entspannung der federelastischen Abstützeinheit 100 eintritt, und andererseits sich das Aktorelement 70 durch die Wirkung der Federelemente 122 von dem Spindelrohr 22 weg bewegen kann, so dass das Druckrohr 54 sich entsprechend bewegt und somit von der Überwurfmutter 46 weg bewegt. Damit kann sich gleichzeitig auch die Druckhülse 52 in gleicher Richtung von der Überwurfmutter 46 weg bewegen und somit in entsprechendem Maße auch die Druckbacken 34, so dass im Gegenzug sich dann auch die Spannbacken 40 radial nach außen bewegen können, um das Werkstück oder das Werkzeug freizugeben.

Somit entspricht der Freigabestellung des Keilelements 80 eine nicht spannende Stellung der Spannvorrichtung 32, während der Druckstellung des Keilelements 80 die ein Werkstück oder Werkzeug spannende Stellung der Spannvorrichtung 32 entspricht.

Um das Schieberelement 110 in der Verschieberichtung 120 bewegen zu können, ist das Schieberelement 110 auf seiner der Kulissenbahn 112 gegenüberliegenden Seite mit einem Aktor 132 einer als Ganzes mit 130 bezeichneten Betätigungseinheit verbunden, welche einen elektrischen Linearantrieb umfasst, der zusätzlich zu dem Aktor 132 noch einen Stator 134 aufweist, welcher so ansteuerbar ist, dass der Aktor 132 sich in der Verschieberichtung 120 so bewegen kann, dass das Schieberelement 110 zwischen einer die Freigabestellung des Keilelements 80 herbeiführenden ersten Schieberstellung, dargestellt in Fig. 1, und einer die Druckstellung des Keilelements 80 herbeiführenden und aufrechterhaltenden zweiten Schieberstellung, dargestellt in Fig. 2, bewegbar ist, wobei der Aktor 132 und das Schieberelement 110 starr miteinander gekoppelt sind.

Dabei werden aufgrund der Tatsache, dass das Trägerrohr 62 mit der Spindel 14 mitrotiert, sich auch das auf dem Trägerrohr 62 sitzende Schieberelement 110 und der Aktor 132 mit der Spindel 14 beim rotierenden Antrieb derselben mitdrehen.

Im Gegensatz dazu dreht sich der Stator 134 nicht mit der Spindel 22 mit, sondern ist stationär angeordnet und sitzt beispielsweise in einem Statorgehäuse 136, welches drehfest beispielsweise mit dem Spindelgehäuse 12 verbunden ist.

Aufgrund der berührungslosen Einwirkung des Stators 134 auf den Aktor 132 besteht somit die Möglichkeit, ohne in der Betätigungseinheit 130 auftretende Reibung zwischen dem Stator 134 und dem Aktor 132 den Aktor 132 in der Verschieberichtung 120 und somit auch das Schieberelement 110 in die gewünschte Stellung zu bewegen, wobei keine Reibungsverluste trotz der Tatsache entstehen, dass der Aktor 132 mit der Spindel 22 mitrotiert, während der Stator 134 stationär mit dem Spindelgehäuse 12 verbunden ist.

Somit besteht die Möglichkeit, über den stationär vorzusehenden Stator 134, der mit Strom versorgt und somit angesteuert werden kann, den Aktor 132 in der Verschieberichtung 120 und somit auch das Schieberelement 110 in der Verschieberichtung 120 zu bewegen, wobei der Aktor 132 mitsamt dem Schieberelement 110 jeweils in der ersten Stellung oder der zweiten Stellung stehen bleibt.

Dabei ist die Spanneinrichtung selbsthaltend ausgebildet, das heißt ohne äußere Einwirkung wird das Schieberelement 110 mit dem Aktor 132 weder die erste Stellung noch die zweite Stellung der Spanneinrichtung 30 verlassen.

Sollte noch eine zusätzliche Sicherung der Position des Schieberelements 110 erfolgen, so besteht die Möglichkeit, den Stator 134 so zu bestromen, dass dieser bei Erreichen der ersten Stellung und/oder der zweiten Stellung des Schieberelements 110 und somit der ersten Stellung oder der zweiten Stellung des Aktors 132 noch mit einem geringen Strom bestromt wird, so dass dieser geringe Strom noch zu einer zusätzlichen Haltekraft in der ersten und/oder der zweiten Stellung des Aktors 132 führt und sich somit das Schieberelement 110 nicht aus der Position heraus bewegen kann, in welche dieses durch Bestromen des Stators 134 und somit bewegen des Aktors 132 gebracht wurde.

Insgesamt besteht insgesamt die Möglichkeit, durch Bewegen des Schieberelements 110 mittels des Aktors 132 die Spannvorrichtung 32 zwischen ihrer ein Werkzeug oder Werkstück mittels der Spannbacken 40 spannenden Stellung oder ein Werkzeug oder Werkstück mit den Spannbacken 40 freigebenden Stellung hin- und herzubewegen, wobei der Vorteil darin zu sehen ist, dass bereits aufgrund des Zusammenwirkens der Kulissenbahn 112 mit dem Keilelement 80 das Schieberelement 110 die erste oder zweite Stellung selbsthaltend aufrecht erhält und somit vom Grundsatz her kein besonderer Aufwand zur Aufrechterhaltung der ersten Stellung oder der zweiten Stellung des Schieberelements 110 erforderlich ist.

## Patentansprüche

1. Spindelanordnung umfassend ein Spindelgehäuse (12) und eine in dem Spindelgehäuse (12) drehbar gelagerte Spindel (14), und eine Aufnahmeeinheit für Werkzeuge oder Werkstücke, welche die Spindel (14) und eine dieser zugeordnete Spanneinrichtung (30) für das Werkzeug oder Werkstück mit in einem Aufnahmeraum (26) der Spindel (14) angeordneten Spannelementen (40) einer Spannvorrichtung (32) und mit einer Spannkrafterzeugungseinheit (60) umfasst, wobei die Spannkrafterzeugungseinheit (60) ein eine Stützfläche (92) aufweisendes Stützelement (90), ein eine Druckfläche (76) aufweisendes Aktorelement (70) und ein Keilelement (80) aufweist, welches durch eine Bewegung in einer Eintrittsrichtung (96) von einer Freigabestellung in eine Druckstellung in einen Zwischenraum (94) zwischen der Stützfläche (92) und der Druckfläche (76) hineinbewegbar ist, um durch Auseinanderbewegen der Stützfläche (92) und der Druckfläche (76) das Aktorelement (70) vom Stützelement (90) weg von einer ersten Stellung in eine zweite Stellung zu verschieben, und welches durch ein eine Kulissenbahn (112) zum Beaufschlagen des Keilelements (80) aufweisendes Schieberelement (110) in der Druckstellung und der Freigabestellung festlegbar und von einer zur anderen bewegbar ist, **dadurch gekennzeichnet, dass** das Schieberelement (110) durch eine elektrische Betätigungseinheit (130) bewegbar ist und dass die elektrische Betätigungseinheit (130) einen mit dem Schieberelement (110) verbundenen und mit der Spindel (14) mitrotierenden Aktor (132) und einen an dem Spindelgehäuse (12) angeordneten Stator (134) aufweist.

2. Spindelanordnung nach Anspruch 1, **dadurch gekennzeichnet, dass** die Eintrittsrichtung (96) quer zu einer Mittelachse (16) der Spindel (14) verläuft.

3. Spindelanordnung nach einem der voranstehenden Ansprüche, **dadurch gekennzeichnet, dass** das Stützelement (90) durch eine federelastische Abstützeinheit (100) abgestützt ist.

4. Spindelanordnung nach Anspruch 3, **dadurch gekennzeichnet, dass** beim Übergang des Keilelements (80) von der Freigabestellung in die Druckstellung das Stützelement (90) vom Aktorelement (70) wegbewegbar ist und die federelastische Abstützeinheit (100) des Stützelements (90) von einem entspannten Zustand in einen gespannten Zustand übergeht.

5. Spindelanordnung nach Anspruch 3 oder 4, **dadurch gekennzeichnet, dass** die federelastische Abstützeinheit (100) in der Druckstellung des Keilelements (80) eine Spannkraft erzeugt, mit welcher das Aktorelement (70) in Richtung der zweiten Stellung wirkt.

6. Spindelanordnung nach einem der voranstehenden Ansprüche, **dadurch gekennzeichnet, dass** die Stützfläche (92) gegenüber der Eintrittsrichtung (96) in einem spitzen Winkel verläuft.

7. Spindelanordnung nach einem der voranstehenden Ansprüche, **dadurch gekennzeichnet, dass** die Druckfläche (76) gegenüber der Eintrittsrichtung (96) einem spitzen Winkel verläuft.

8. Spindelanordnung nach einem der voranstehenden Ansprüche, **dadurch gekennzeichnet, dass** das Keilelement (80) mindestens eine in einem spitzen Winkel zur Eintrittsrichtung (96) verlaufende Keilfläche (82) aufweist.

9. Spindelanordnung nach einem der voranstehenden Ansprüche, **dadurch gekennzeichnet, dass** das Keilelement (80) als Kugel ausgebildet ist.

10. Spindelanordnung nach einem der voranstehenden Ansprüche, **dadurch gekennzeichnet, dass** das Keilelement (80) zwischen der Freigabestellung und der Druckstellung einen Weg in der Eintrittsrichtung (96) durchläuft, welcher größer ist als der Weg, über welchen das Aktorelement (70) zwischen der ersten Stellung und der zweiten Stellung bewegbar ist.

11. Spindelanordnung nach einem der voranstehenden Ansprüche, **dadurch gekennzeichnet, dass** die Kulissenbahn (112) des Schieberelements (110) so ausgebildet ist, dass ein Schieberweg, welchen das Schieberelement (110) zwischen der ersten Stellung und der zweiten Stellung durchläuft, größer ist als der Weg des Keilelements (80) zwischen der Freigabestellung und der Druckstellung.

12. Spindelanordnung nach einem der voranstehenden Ansprüche, **dadurch gekennzeichnet, dass** die Spannkrafterzeugungseinheit (60) in der ersten und der zweiten Stellung selbsthaltend ausgebildet ist.

13. Spindelanordnung nach einem der voranstehenden Ansprüche, **dadurch gekennzeichnet, dass** die elektrische Betätigungseinheit (130) einen Linearantrieb umfasst, und zwischen der ersten Stellung und der zweiten Stellung bewegbar ist.

## Claims

1. Spindle arrangement comprising a spindle housing (12) and a spindle (14) mounted for rotation in the spindle housing (12) and a receiving unit for tools or workpieces comprising the spindle (14) and a clamping apparatus (30) for the tool or workpiece associated with it and having clamping elements (40) of a clamping device (32) arranged in a receiving area (26) of the spindle (14) and a unit (60) for generating a clamping force, wherein the unit (60) for generating a clamping force has a supporting element (90) with a supporting surface (92), an actuator element (70) with a pressure surface (76) and a wedging element (80) movable into an intermediate space (94) between the supporting surface (92) and the pressure surface (76) as a result of movement in an entry direction (96) from a release position into a pressure position in order to displace the actuator element (70) away from the supporting element (90) from a first position into a second position as a result of movement of the supporting surface (92) and the pressure surface (76) away from one another, and said wedging element being securable in the pressure position and the release position and being movable from one position to the other by means of a slide element (110) with a connecting link path (112) for acting on the wedging element (80), **characterized in that** the slide element (110) is movable by means of an electrical actuating unit (130) and that the electrical actuating unit (130) has an actuator (132) connected to the slide element (110) and co-rotating with the spindle (14) and a stator (134) arranged on the spindle housing (12).

2. Spindle arrangement as defined in claim 1, **characterized in that** the entry direction (96) extends transversely to a central axis (16) of the spindle (14).

3. Spindle arrangement as defined in either one of the preceding claims, **characterized in that** the supporting element (90) is supported by an elastic spring supporting unit (100).

4. Spindle arrangement as defined in claim 3, **characterized in that** during the transition of the wedging element (80) from the release position into the pressure position the supporting element (90) is movable away from the actuator element (70) and the elastic spring supporting unit (100) of the supporting element (90) transfers from a non-tensioned state into a tensioned state.

5. Spindle arrangement as defined in claim 3 or 4, **characterized in that** in the pressure position of the wedging element (80) the elastic spring supporting unit (100) generates a clamping force, the actuator element (70) acting in the direction of the second position with said force.

6. Spindle arrangement as defined in any one of the preceding claims, **characterized in that** the supporting surface (92) extends at an acute angle in relation to the entry direction (96).

7. Spindle arrangement as defined in any one of the preceding claims, **characterized in that** the pressure surface (76) extends at an acute angle in relation to the entry direction (96).

8. Spindle arrangement as defined in any one of the preceding claims, **characterized in that** the wedging element (80) has at least one wedging surface (82) extending at an acute angle to the entry direction (96).

9. Spindle arrangement as defined in any one of the preceding claims, **characterized in that** the wedging element (80) is designed as a sphere.

10. Spindle arrangement as defined in any one of the preceding claims, **characterized in that** between the release position and the pressure position the wedging element (80) travels a distance in the entry direction (96) greater than the distance the actuator element (70) is movable between the first position and the second position.

11. Spindle arrangement as defined in any one of the preceding claims, **characterized in that** the connecting link path (112) of the slide element (110) is designed such that a sliding distance travelled by the slide element (110) between the first position and the second position is greater than the distance of the wedging element (80) between the release position and the pressure position.

12. Spindle arrangement as defined in any one of the preceding claims, **characterized in that** the unit (60) for generating a clamping force is designed to be self-locking in the first and the second positions.

13. Spindle arrangement as defined in any one of the preceding claims, **characterized in that** the electrical actuating unit (130) comprises a linear drive and is movable between the first position and the second positions.

## Revendications

1. Ensemble de broche comprenant un boîtier de broche (12) et une broche (14) montée de façon rotative dans le boîtier de broche (12), et une unité de réception pour des outils ou des pièces, laquelle comprend la broche (14) et un ensemble de serrage (30) associé à celle-ci pour l'outil ou la pièce avec des éléments de serrage (40) d'un dispositif de serrage (32) disposés dans une chambre de réception (26) de la broche (14) et avec une unité de production de force de serrage (60), l'unité de production de force de serrage (60) présentant un élément d'appui (90) comportant une face d'appui (92), un élément actionneur (70) comportant une face de pression (76) et un élément de coin (80), qui peut être enfoncé, par un mouvement dans une direction de pénétration (96), d'une position de libération à une position de pression dans une chambre intermédiaire (94) entre la face d'appui (92) et la face de pression (76), pour déplacer, par un mouvement d'écartement de la face d'appui (92) et de la face de pression (76), l'élément actionneur (70) loin de l'élément d'appui (90) d'une première position à une deuxième position, et qui peut être fixé dans la position de pression et dans la position de libération par un élément de curseur (110) présentant une piste de coulisse (112) pour solliciter l'élément de coin (80) et qui peut être déplacé d'une position à l'autre, **caractérisé en ce que** l'élément de curseur (110) peut être déplacé par une unité d'actionnement électrique (130) et **en ce que** l'unité d'actionnement électrique (130) présente un actionneur (132) relié à l'élément de curseur (110) et tournant avec la broche (14) et un stator (134) disposé sur le boîtier de broche (12).

2. Ensemble de broche selon la revendication 1, **caractérisé en ce que** la direction de pénétration (96) s'étend transversalement à un axe central (16) de la broche (14).

3. Ensemble de broche selon l'une quelconque des revendications précédentes, **caractérisé en ce que** l'élément d'appui (90) est supporté par une unité de support élastique à ressort (100).

4. Ensemble de broche selon la revendication 3, **caractérisé en ce que**, lors du passage de l'élément de coin (80) de la position de libération à la position de pression, l'élément d'appui (90) peut être écarté de l'élément actionneur (70) et l'unité de support élastique à ressort (100) de l'élément d'appui (90) passe d'un état relaxé à un état contraint.

5. Ensemble de broche selon la revendication 3 ou 4, **caractérisé en ce que** l'unité de support élastique à ressort (100) produit, dans la position de pression de l'élément de coin (80), une force de serrage avec laquelle l'élément actionneur (70) agit en direction de la deuxième position.

6. Ensemble de broche selon l'une quelconque des revendications précédentes, **caractérisé en ce que** la face d'appui (92) s'étend sous un angle aigu par rapport à la direction de pénétration (96).

7. Ensemble de broche selon l'une quelconque des revendications précédentes, **caractérisé en ce que** la face de pression (76) s'étend sous un angle aigu par rapport à la direction de pénétration (96).

8. Ensemble de broche selon l'une quelconque des revendications précédentes, **caractérisé en ce que** l'élément de coin (80) présente au moins une face de coin (82) s'étendant sous un angle aigu par rapport à la direction de pénétration (96).

9. Ensemble de broche selon l'une quelconque des revendications précédentes, **caractérisé en ce que** l'élément de coin (80) est réalisé sous la forme de billes.

10. Ensemble de broche selon l'une quelconque des revendications précédentes, **caractérisé en ce que** l'élément de coin (80) parcourt, entre la position de libération et la position de pression, un chemin dans la direction de pénétration (96), qui est plus long que le chemin sur lequel l'élément d'actionneur (70) est déplaçable entre la première position et la deuxième position.

11. Ensemble de broche selon l'une quelconque des revendications précédentes, **caractérisé en ce que** la piste de coulisse (112) de l'élément de curseur (110) est conçue de telle manière qu'un chemin de curseur, que l'élément de curseur (110) parcourt entre la première position et la deuxième position, soit plus long que le chemin de l'élément de coin (80) entre la position de libération et la position de pression.

12. Ensemble de broche selon l'une quelconque des revendications précédentes, **caractérisé en ce que** l'unité de production de force de serrage (60) est réalisée de façon auto-stationnaire dans la première position et dans la deuxième position.

13. Ensemble de broche selon l'une quelconque des revendications précédentes, **caractérisé en ce que** l'unité d'actionnement électrique (130) comprend un entraînement linéaire, et est déplaçable entre la première position et la deuxième position.
